# EUROPEAN PATENT SPECIFICATION

(11) **EP 4 141 370 B1**
(45) Date of publication and mention of the grant of the patent: **23.04.2025**
(21) Application number: 22192205.7
(22) Date of filing: 25.08.2022
(51) Int. Cl.: F28D 7/08, F28D 7/16, F28F 7/02

(54) **FRACTAL OPTIMIZED CORE SHAPE (ADDMFG)**
FRAKTALE OPTIMIERTE KERNFORM (ADDMFG)
FORME FRACTALE DE NOYAU OPTIMISÉE (ADDMFG)

(30) Priority: 31.08.2021 US 202163239270 P; 04.08.2022 US 202217881169
(43) Date of publication of application: 01.03.2023
(73) Proprietor: Hamilton Sundstrand Corporation, Charlotte, NC 28217-4578 (US)
(72) Inventor: GIULIANO, John, North Granby, CT, 06060 (US); COLSON, Paul M., Westfield, MA, 01085 (US)
(74) Representative: Dehns

(56) References cited:
- EP-A1- 3 705 831
- US-A1- 2019 219 337
- US-A1- 2020 284 517
- US-A1- 2021 190 443

## Description

### BACKGROUND

The present disclosure relates to heat exchangers, and more particularly, to a heat exchanger cores. More specifically, the present invention relates to heat exchangers as defined in the preamble of claim 1, and as illustrated in EP 3 705 831.

Heat exchangers are often used to transfer heat between two fluids. For example, in aircraft environmental control systems, heat exchangers may be used to transfer heat between a relatively hot air source (e.g., bleed air from a gas turbine engine) and a relatively cool air source (e.g., ram air).

### SUMMARY

In one example, a heat exchanger includes a heat exchanger core. The heat exchanger core includes a plurality of tubes. Each tube of the plurality of tubes includes a first end and a second end and extends from the first end to the second end in a lengthwise direction. Each tube of the plurality of tubes is spaced from adjacent tubes in a height-wise direction and a widthwise direction. The plurality of tubes is stacked to create a concave profile in the height-wise direction and widthwise direction. The concave profile extends in the lengthwise direction.

In another example, a heat exchanger includes a first header, a second header, and a core. The first header includes an inlet and an outlet. The outlet is fluidically connected to the inlet. The second header includes an inlet and an outlet. The outlet of the second header is fluidically connected to the inlet of the second header. The core includes a plurality of tubes and each tube of the plurality of tubes extends in a lengthwise direction from a first end to a second end. The first end of each tube of the plurality of tubes is fluidically connected to the outlet of the first header, and the second end of each tube of the plurality of tubes is fluidically connected to the inlet of the second header. The plurality of tubes is stacked to create a concave profile in the height-wise direction and the widthwise direction, and the concave profile extends in the lengthwise direction.

Persons of ordinary skill in the art will recognize that other aspects and embodiments of the present invention are possible in view of the entirety of the present disclosure, including the accompanying figures.

### BRIEF DESCRIPTION OF THE DRAWINGS

FIG. 1 is a perspective view of a heat exchanger.
FIG. 2A is a schematic of a cross-sectional view of the heat exchanger from FIG. 1 taken at line A-A.
FIG. 2B is a schematic of a cross-sectional view of heat exchanger from FIG. 1 taken at line A-A.
FIG. 3 is a perspective view of an alternative embodiment of a heat exchanger.
FIG. 4 is a perspective view of an alternative embodiment of a core of a heat exchanger.

While the above-identified drawing figures set forth one or more embodiments of the invention, other embodiments are also contemplated. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings. Like reference numerals identify similar structural elements.

### DETAILED DESCRIPTION

This disclosure relates to an additively manufactured heat exchanger with plenum headers or with fractal headers that utilizes a non-rectangular core as a means of capturing and retaining the external flow. The heat exchanger includes a first header, a second header (hereinafter first header and second header can be referred to together as "headers"), and a core. The first header includes an inlet and an outlet. The second header includes an inlet and an outlet. The core includes a plurality of tubes that extends from a first end to a second end in a lengthwise direction. Each tube of the plurality of tubes is spaced from adjacent tubes in a height-wise direction and a widthwise direction. The plurality of tubes is stacked to create a concave profile in the height-wise direction and the widthwise direction. The concave profile extends in the lengthwise direction. In one example, each tube of the plurality of tubes can also include a bend between the first end and the second end. The first end of each tube of the plurality of tubes is fluidically connected to the outlet of the first header. The second end of each tube of the plurality of tubes is fluidically connected to the inlet of the second header.

As discussed above, the heat exchanger can include non-fractal headers. In another example, the heat exchanger can include fractal headers. Fractal headers include an inlet, a primary flow duct, a plurality of secondary flow ducts, and a multiplicity of tertiary flow ducts. The primary flow duct is fluidically connected to the inlet of the header. The plurality of secondary flow ducts is fluidically connected to the inlet by the primary flow duct. The primary flow duct splits to form the plurality of secondary flow ducts. The multiplicity of tertiary flow ducts is fluidically connected to the inlet by the plurality of secondary flow ducts and the primary flow ducts. Each of the plurality of secondary flow ducts splits to form the multiplicity of tertiary flow ducts. When the heat exchanger includes fractal headers, the first end of each tube of the plurality of tubes is connected to one flow duct of the multiplicity of tertiary flow ducts of the first header. The second end of each tube of the plurality of tubes is connected to one flow duct of the multiplicity of tertiary flow ducts of the second header.

The heat exchangers as discussed above can be surrounded by a flow housing that includes an inlet and an outlet. The inlet of the flow housing is fluidically connected to the outlet of the flow housing. The first header, the core, and the second header form a primary flow path and the flow housing forms a secondary flow path. At least the plurality of tubes are disposes inside the flow housing. The primary flow path is fluidically isolated from the secondary flow path. The concave profile of the plurality of tubes faces an upstream direction of the secondary path. In another example, the plurality of tubes can be stacked to include a second concave profile. Together the first concave profile and the second concave profile form a sinusoidal profile. The sinusoidal profile can extend the entire length of the plurality of tubes in the lengthwise direction. Similar to the concave profile, the sinusoidal profile faces the upstream direction of the secondary flow path. Both the concave profile and the sinusoidal profile help direct a secondary flow as the secondary flow traverses the plurality of tubes. The concave profiles and the sinusoidal profile help distribute the secondary flow across the plurality of tubes to improve the heat transfer capabilities of the heat exchanger. In another example, the plurality of tubes can include a bend that increases the surface area of the plurality of tubes, which increases the heat transfer capabilities of the heat exchanger. The bend in the plurality of tubes also helps customize the shape of the heat exchanger so that the heat exchanger can fit in tight and/or customized envelopes.

Heat exchangers often utilize a rectangular core with shrouding or ducting to direct the external flow over the heat exchanger surface. In high-performance heat exchangers, this shrouding can face several challenges: the shrouding adds weight to the heat exchanger system, the shrouding can be susceptible to failure due to vibrational forces and, the shrouding can capture heat that generates thermal stresses and result in thermal expansion of the heat exchanger. The heat exchanger as discussed above addresses these concerns by changing the shape of the heat exchanger core and reducing the effects of external flow loss without using shrouds. The heat exchanger will be discussed below with reference to the figures.

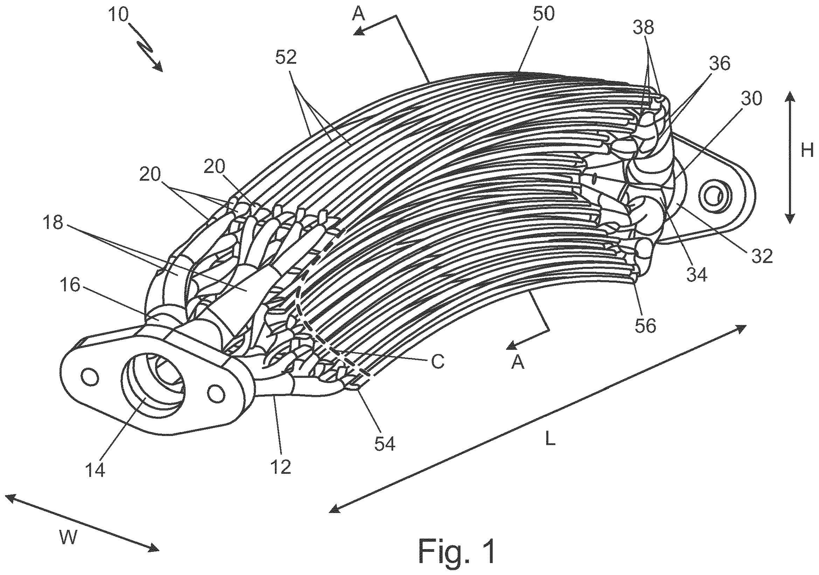

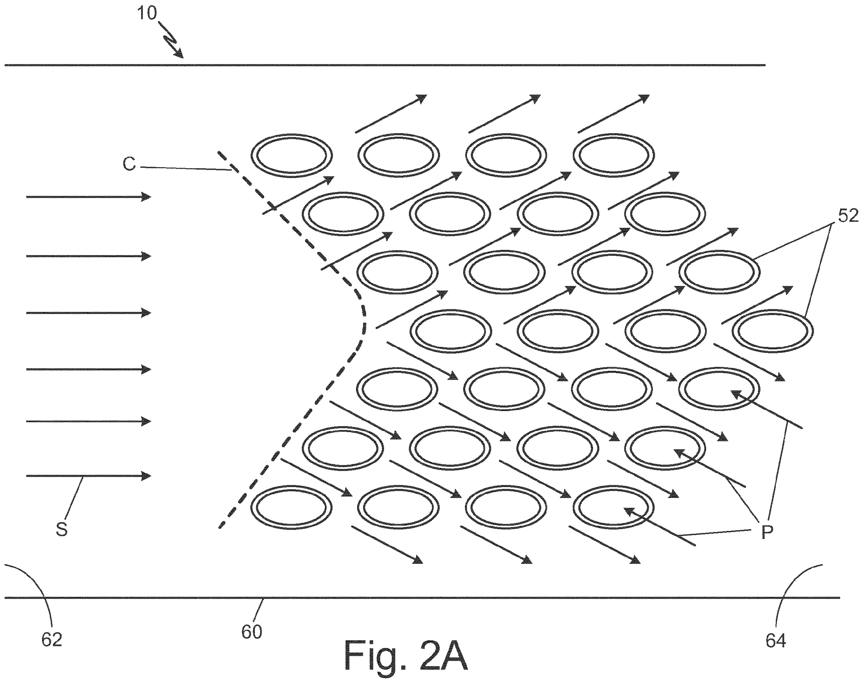

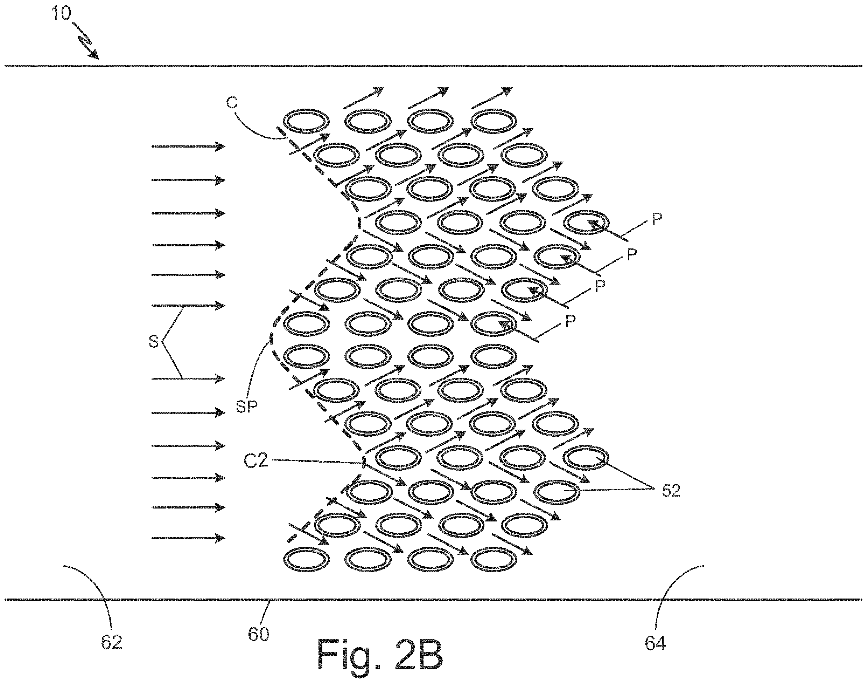

FIG. 1 is a perspective view of heat exchanger 10. Heat exchanger 10 includes first header 12, second header 30, and core 50. As shown in FIG. 1, first header 12 includes first header inlet 14, primary flow duct 16, plurality of secondary flow ducts 18 (referred to as "secondary flow ducts 18"), and multiplicity of tertiary flow ducts 20 (referred to as tertiary flow ducts 20"). As also shown in FIG. 1, second header 30 includes second header outlet 32, primary flow duct 34, plurality of secondary flow ducts 36 (referred to as "secondary flow ducts 36"), and multiplicity of tertiary flow ducts 38 (referred to as tertiary flow ducts 38"). Core 50 includes plurality of tubes 52 (referred to as "tubes 52"). Each tube of tubes 52 includes first end 54 and second end 56. Flow housing 60, as shown in FIG. 2, includes flow housing inlet 62 and flow housing outlet 64. Heat exchanger 10 also includes lengthwise direction L, widthwise direction W, and height-wise direction H. Tubes 52 form concave profile C.

As shown in FIG. 1, first header 12 is a header with fractal geometry. Primary flow duct 16 of first header 12 is fluidically connected to first header inlet 14. Primary flow duct 16 of first header 12 splits to form secondary flow ducts 18 of first header 12. Secondary flow ducts 18 of first header 12 are fluidically connected to first header inlet 14 by primary flow duct 16 of first header 12. Each flow duct of secondary flow ducts 18 of first header 12 splits to form tertiary flow ducts 20 of first header 12. Tertiary flow ducts 20 are fluidically connected to first header inlet 14 by secondary flow ducts 18 of first header 12 and primary flow duct 16 of first header 12.

As also shown in FIG. 1, second header 30 is a header with fractal geometry. Primary flow duct 34 of second header 30 is fluidically connected to second header outlet 32. Primary flow duct 34 of second header 30 splits to form secondary flow ducts 36 of second header 30. Secondary flow ducts 36 of second header 30 are fluidically connected to second header outlet 32 by primary flow duct 34 of second header 30. Each flow duct of secondary flow ducts 36 of second header 30 splits to form tertiary flow ducts 38 of second header 30. Tertiary flow ducts 38 are fluidically connected to second header outlet 32 by secondary flow ducts 36 of second header 30 and primary flow duct 34 of second header 30.

Each tube of tubes 52 extends from first end 54 to second end 56 in lengthwise direction L. Each tube of tubes 52 is spaced from adjacent tubes in height-wise direction H and widthwise direction W. Tubes 52 are stacked to create concave profile C in height-wise direction H and widthwise direction W. Concave profile C extends in lengthwise direction L. In the example shown in FIG. 1, concave profile C extends the entire length of tubes 52 in lengthwise direction L. In another example, concave profile C can extend a portion of the length of tubes 52 in lengthwise direction L. First end 54 of each tube of tubes 52 is connected to one of tertiary flow ducts 20 of first header 12. Second end 56 of each tube of tubes 52 is connected to one of tertiary flow ducts 38 of second header 30.

FIG. 2A is a schematic of a cross-sectional view of heat exchanger 10 taken at line A-A. Heat exchanger 10 includes flow housing 60. Flow housing 60 includes flow housing inlet 62 and housing outlet 64. Flow housing 60 can be a duct, an envelope, shroud, or a manifold. As shown in FIG. 2A, primary flow path P flows through tubes 52 either into or out of the page. In the example shown in FIG. 2A, flow housing 60 surrounds first header 12, second header 30, and core 50. In another example, flow housing 60 can surround just core 50. Flow housing inlet 62 is fluidically connected to flow housing outlet 64. First header 12, second header 30, and core 50 form primary flow path P. Flow housing 60 forms secondary flow path S with secondary flow path S passing through the spaces between tubes 52. Primary fluid path P is fluidically isolated from secondary fluid path S.

In one example, secondary flow path S flows transverse to primary flow path P and between tubes 52. In another example, secondary flow path S flows parallel to primary flow path P and between tubes 52. In yet another example, tubes 52 are curved such that secondary flow path S flows transverse to primary flow path P at some portion of tubes 52, and secondary flow path S flows parallel to primary flow path P at some portion of tubes 52. Concave profile C faces an upstream direction of secondary flow path S. Because concave profile C faces the upstream direction of secondary flow path S, concave profile C has a greater surface area in contact with secondary flow path S as secondary flow path S enters between tubes 52. The increased surface area in contact between concave profile C and secondary flow path S helps mitigate losses as secondary flow path S flows between tubes 52. Because there are reduced losses as secondary flow path S travels through tubes 52, secondary flow path S is better distributed across tubes 52. Thus, as a result of concave profile C, secondary flow path S contacts more surface area of tubes 52. The increase of contact between secondary flow path S and tubes 52 results in greater heat transfer of a fluid in primary flow path P and a fluid in secondary flow path S. In one example, the fluid in primary flow path P can be a hot fluid, (e.g., bleed air from a gas turbine engine) and the fluid in secondary flow path S can be a cold fluid (e.g., ram air). In another example, the fluid in primary flow path P can be a cold fluid (e.g., ram air) and the fluid in secondary flow path S can be a hot fluid, (e.g., bleed air from a gas turbine engine).

In the example of FIG. 2A, tubes 52 are stacked to form concave profile C. In another example, as shown in FIG. 2B, tubes 52 can be stacked to create second concave profile C2 in height-wise direction H and widthwise direction W. Together second concave profile C2 extends in the lengthwise direction. Concave profile C and second concave profile C2 form sinusoidal profile SP. Sinusoidal profile SP extends an entire length of tubes 52 in lengthwise direction L. Sinusoidal profile SP faces an upstream direction of secondary flow path S. Because sinusoidal profile SP faces the upstream direction of secondary flow path S, sinusoidal profile SP has a greater surface area in contact with secondary flow path S as secondary flow path S enters between tubes 52. The increased surface area in contact between sinusoidal profile SP and secondary flow path S helps mitigate losses as secondary flow path S navigates between tubes 52. Because there are reduced losses as secondary flow path S travels through tubes 52, secondary flow path S is better distributed across tubes 52. Thus, as a result of sinusoidal profile SP, secondary flow path S contacts more surface area of tubes 52. The increase of contact between secondary flow path S and tubes 52 results in greater heat transfer of a fluid in primary flow path P and a fluid in secondary flow path S. In yet another example, tubes 52 can be stacked to create a U-shaped, V-shaped, repeating wave, parabolic, square wave, convex, hemispherical, dished, semi-elliptical, torispherical, toriconical, conical, semi-cylindrical, and/or any other profile shape that can help guide secondary flow S through tubes 52.

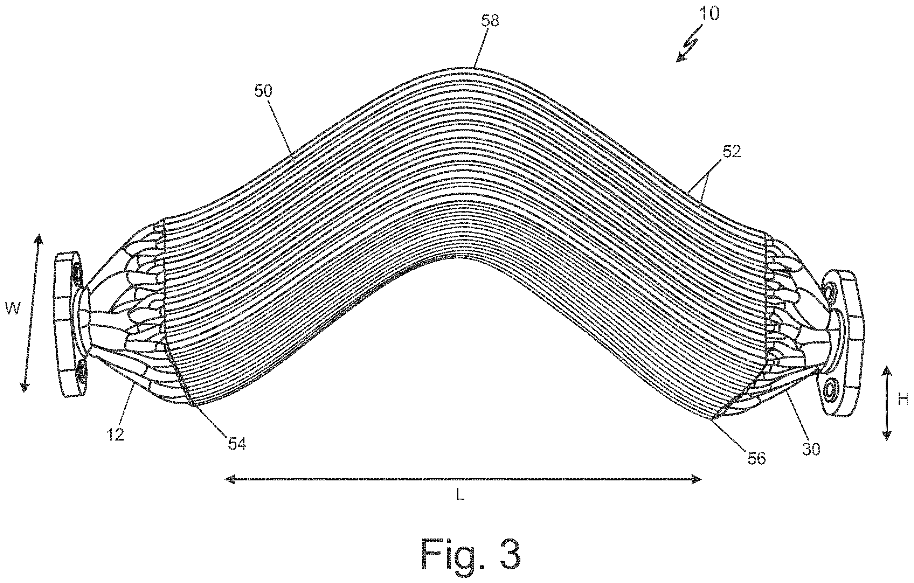

FIG. 3 is a perspective view of an alternative embodiment of heat exchanger 10. As shown in FIG. 3, each tube of tubes 52 can include bend 58 between first end 54 and second end 56. Bend 58 in tubes 52 between first end 54 and second end 56 allows core 50 to have an increased length and be packed in the same linear distance in longitudinal direction L. As a result of core 50 having an increased length, heat exchanger 10 has an increased surface area of tubes 52. The increased surface area of tubes 52 increases the heat transfer capabilities of heat exchanger 10. Further, bend 58 can be altered to fit heat exchanger 10 within a tight or custom envelop, while maintaining heat exchanger capabilities as compared to traditional heat exchangers, which are generally box-shaped.

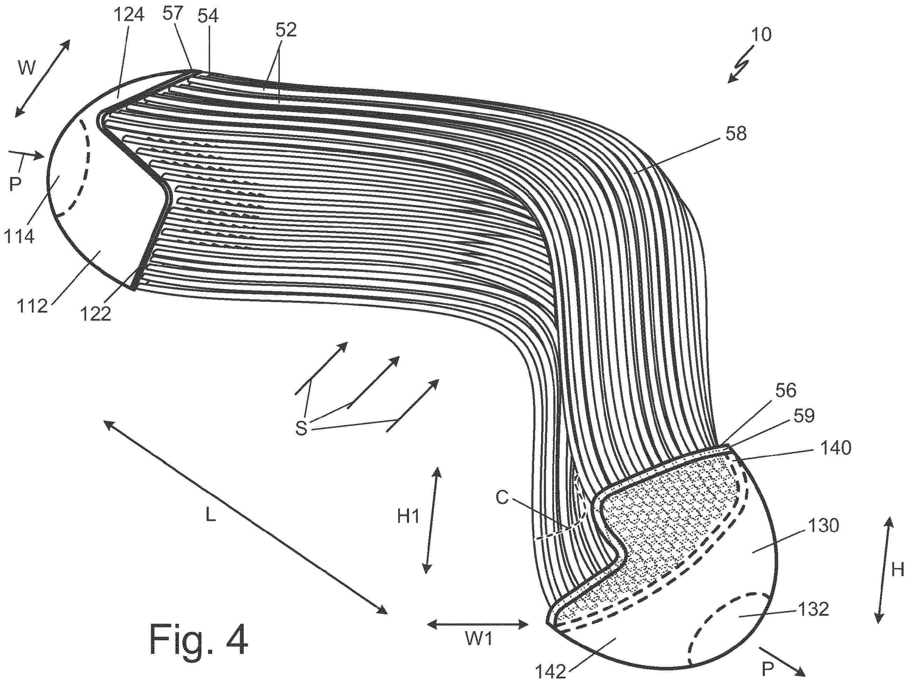

FIG. 4 is a perspective view of an alternative embodiment of core 50 of heat exchanger 10. As shown in FIG. 4, core 50 includes first panel 57 and second panel 59. First panel 57 extends in height-wise direction H1 and extends widthwise direction W1. Second 59 extends in height-wise direction H2 and extends in widthwise direction W2. First end 54 of each tube of tubes 52 extends through first panel 57. Second end 56 of each tube of tubes 52 extends through second panel 59. First panel 57 and second panel 59 help support core 50 and improve the durability of heat exchanger 10. Additionally, first panel 57 and second panel 59 support core 50 so that core 50 can be additively manufactured without first header 112 or second header 130.

As shown in FIG. 4, heat exchanger 10 first header 112 and second header 130 can be plenum headers. First header 114 includes first header inlet 114, first header outlet 122, and first header plenum 124, which fluidically connects first header inlet 114 to first header outlet 122. Second header 130 includes second header outlet 132, second header inlet 140, and second header plenum 142, which fluidically connects second header outlet 132 and second header inlet 140. First header 112 can be welded or brazed to first panel 57 and second header 130 can be welded or brazed to second panel 59.

As shown in FIG. 4, each tube of tubes 52 is stacked in concave profile C in height-wise direction H and widthwise direction W. Concave profile C of tubes 52 extends in lengthwise direction L. As discussed above, tubes 52 with concave profile C have a greater surface area between secondary flow path S and tubes 52 than traditional heat exchangers, which are typically box-shaped. The increase of surface area between secondary flow path S and tubes 52 results in greater heat transfer capabilities. In addition to concave profile C, in the example of FIG. 4, tubes 52 of core 50 includes bend 58 between first end 54 and second end 56. As discussed above, bend 58 also increases the heat transfer of heat exchanger 10. Therefore, as shown in FIG 4, heat exchanger 10 has the benefit of having tubes 52 with concave profile C and tubes 52 having bend 58 between first end 54 and second end 56 of tubes 52. Thus, heat exchanger 10 as shown in FIG. 4 has improved heat transfer capabilities over traditional heat exchangers.

To obtain these complex geometries, heat exchanger 10 can be made using additive manufacturing. In one example, first header 12, second header 30, and core 50 can be additively manufactured a single monolithic part in a single additive manufacturing process. In another example, first header 12 and core 50 can be additively manufactured as a single monolithic part in a single additive manufacturing process. When first header 12 and core 50 are a single monolithic part second header 30 can be brazed or welded to first header 12 and core 50. In another example, second header 30 and core 50 can be additively manufactured in as a single monolithic part in a single additive manufacturing process. When second header 30 and core 50 are a single monolithic part first header 12 can be brazed or welded to second header 30 and core 50. In yet another example, first header 12 and second header 30 can be additively manufactured, core 50 can be additively manufactured in a second process, and first header 12 and second header 30 can be brazed or welded to core 50. Another benefit of the bend in tubes 52 is that the bend in tubes 52 allows a heat exchanger of greater heat exchange properties (longer surface area of tubes 52) to be built on an additively manufacturing machine with a smaller build platform.

### Discussion of Possible Embodiments

The following are non-exclusive descriptions of possible embodiments of the present invention.

A heat exchanger includes a heat exchanger core. The heat exchanger core includes a plurality of tubes. Each tube of the plurality of tubes includes a first end and a second end and extends from the first end to the second end in a lengthwise direction. Each tube of the plurality of tubes is spaced from adjacent tubes in a height-wise direction and a widthwise direction. The plurality of tubes is stacked to create a concave profile in the height-wise direction and widthwise direction. The concave profile extends in the lengthwise direction.

The heat exchanger of the preceding paragraph can optionally include, additionally and/or alternatively, any one or more of the following features, configurations and/or additional components:
wherein the concave profile extends an entire length of the plurality of tubes in the lengthwise direction;
wherein each tube of the plurality of tubes includes a bend between the first end and the second end;
further including: a first header including: an inlet; a primary flow duct fluidically connected to the inlet; a plurality of secondary flow ducts fluidically connected to the inlet by the primary flow duct, wherein the primary flow duct splits to form the plurality of secondary flow ducts; and a multiplicity of tertiary flow ducts fluidically connected to the inlet by the plurality of secondary flow ducts and the primary flow duct, wherein each flow duct of the plurality of secondary flow ducts splits to form the multiplicity of tertiary flow ducts; and a second header including: an outlet; a primary flow duct fluidically connected to the outlet; a plurality secondary flow ducts fluidically connected to the outlet by the primary flow duct of the second header, wherein the primary flow duct of the second header splits to form the plurality of secondary flow ducts of the second header; and a multiplicity of tertiary flow ducts fluidically connected to the outlet by the plurality of secondary flow ducts of the second header and the primary flow duct of the second header, wherein each flow duct of the plurality of secondary flow ducts of the second header splits to form the multiplicity of tertiary flow ducts of the second header;
wherein the first end of each tube of the plurality of tubes is connected to one of the multiplicity of tertiary flow ducts of the first header, and wherein the second end of each tube of the plurality of tubes is connected to one of the multiplicity of tertiary flow ducts of the second header;
including a flow housing that surrounds the heat exchanger core, wherein the flow housing includes an inlet and an outlet, and wherein the inlet of the flow housing and the outlet of the flow housing are fluidically connected;
wherein the flow housing is a duct, an envelope, a shroud, or a manifold, and wherein the first header, the heat exchanger core, and the second header form a primary flow path, and wherein the flow housing forms a secondary flow path;
wherein the primary flow path is fluidically isolated from the secondary flow path, and wherein the secondary flow path is transverse to the primary flow path; and/or
wherein the concave profile faces an upstream direction of the secondary flow path.

In another example, a heat exchanger includes a first header, a second header, and a core. The first header includes an inlet and an outlet. The outlet is fluidically connected to the inlet. The second header includes an inlet and an outlet. The outlet of the second header is fluidically connected to the inlet of the second header. The core includes a plurality of tubes and each tube of the plurality of tubes extends in a lengthwise direction from a first end to a second end. The first end of each tube of the plurality of tubes is fluidically connected to the outlet of the first header, and the second end of each tube of the plurality of tubes is fluidically connected to the inlet of the second header. The plurality of tubes is stacked to create a concave profile in the height-wise direction and the widthwise direction, and the concave profile extends in the lengthwise direction.

The heat exchanger of the preceding paragraph can optionally include, additionally and/or alternatively, any one or more of the following features, configurations and/or additional components:
wherein the concave profile extends an entire length of the plurality of tubes in the lengthwise direction;
wherein the core further includes: a first panel extending in a height-wise direction and extending in a widthwise direction; and a second panel extending in a height-wise direction and extending in a widthwise direction, wherein the first end of each plurality of tubes extends through the first panel, and the second end of each plurality of tubes extends through the second panel, and wherein each tube of the plurality of tubes includes a bend between the first end and the second end;
wherein the plurality of tubes are stacked to create a second concave profile in the height-wise direction and the widthwise direction, wherein the second concave profile extends in the lengthwise direction;
wherein the concave profile and the second concave profile together form a sinusoidal profile extending an entire length of the plurality of tubes in the lengthwise direction;
wherein the heat exchanger further includes: a flow housing that surrounds the core, wherein the flow housing includes: an inlet fluidically connected to an outlet;
wherein the first header, the core, and the second header form a primary flow path, and wherein flow housing forms a secondary flow path;
wherein the primary flow path is fluidically isolated from the secondary flow path, wherein the secondary flow path is transverse to the primary flow path, and wherein the sinusoidal profile faces an upstream direction of the secondary flow path;
wherein the core is additively manufactured, and wherein the first header and the second header are brazed or welded to the core;
wherein the first header and the core are additively manufactured as a single monolithic part; and/or
wherein the first header, the core, and the second header are additively manufactured as a single monolithic part.

While the invention has been described with reference to an exemplary embodiment(s), it will be understood by those skilled in the art that various changes may be made and equivalents may be substituted for elements thereof without departing from the scope of the invention. For example, tubes 52 can be made from shapes with irregular cross-sections to further improve the surface area between primary flow path P and secondary flow path S, which will increase the heat transfer between fluids flowing through primary flow path P and fluids flowing through secondary flow path S. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A heat exchanger (10) comprising:
a heat exchanger core (50), wherein the heat exchanger core comprises:
a plurality of tubes (52) comprising:
a first end (54); and
a second end (56), wherein each tube of the plurality of tubes (52) extends from the first end (54) to the second end (56) in a lengthwise direction, and wherein each tube of the plurality of tubes (50) is spaced from adjacent tubes in a height-wise direction and a widthwise direction, the heat exchanger being **characterized in that** the plurality of tubes (50) is stacked to create a concave profile in the height-wise direction and widthwise direction, and wherein the concave profile extends an entire length of the plurality of tubes in the lengthwise direction.

2. The heat exchanger of claim 1, wherein each tube of the plurality of tubes (50) comprises a bend between the first end and the second end.

3. The heat exchanger of claim 2, further comprising:
a first header (12) comprising:
an inlet (14);
a primary flow duct (16) fluidically connected to the inlet (14);
a plurality of secondary flow ducts (18) fluidically connected to the inlet (14) by the primary flow duct (16), wherein the primary flow duct (16) splits to form the plurality of secondary flow ducts (18); and
a multiplicity of tertiary flow ducts (20) fluidically connected to the inlet (14) by the plurality of secondary flow ducts (18) and the primary flow duct (16), wherein each flow duct of the plurality of secondary flow ducts (18) splits to form the multiplicity of tertiary flow ducts (20); and
a second header (30) comprising:
an outlet (32);
a primary flow duct (34) fluidically connected to the outlet (32);
a plurality secondary flow ducts (36) fluidically connected to the outlet (32) by the primary flow duct (34) of the second header, wherein the primary flow duct (34) of the second header splits to form the plurality of secondary flow ducts (36) of the second header; and
a multiplicity of tertiary flow ducts (38) fluidically connected to the outlet (32) by the plurality of secondary flow ducts (36) of the second header and the primary flow duct (34) of the second header, wherein each flow duct of the plurality of secondary flow ducts (36) of the second header splits to form the multiplicity of tertiary flow ducts (38) of the second header.

4. The heat exchanger of claim 3, wherein the first end of each tube of the plurality of tubes (52) is connected to one of the multiplicity of tertiary flow ducts (20) of the first header, and wherein the second end of each tube of the plurality of tubes (52) is connected to one of the multiplicity of tertiary flow ducts (38) of the second header.

5. The heat exchanger of claim 4, comprising a flow housing (60) that surrounds the heat exchanger core (50), wherein the flow housing comprises an inlet (62) and an outlet (64), and wherein the inlet (62) of the flow housing and the outlet (64) of the flow housing are fluidically connected.

6. The heat exchanger of claim 5, wherein the flow housing (60) is a duct, an envelope, a shroud, or a manifold, and wherein the first header (12), the heat exchanger core (50), and the second header (30) form a primary flow path (P), and wherein the flow housing (60) forms a secondary flow path (S), and preferably wherein the primary flow path (P) is fluidically isolated from the secondary flow path (S), and wherein the secondary flow path (S) is transverse to the primary flow path (P), and preferably wherein the concave profile faces an upstream direction of the secondary flow path (S).

7. A heat exchanger (10) comprising:
a first header (112) comprising:
an inlet (114); and
an outlet (122), wherein the outlet is fluidically connected to the inlet;
a second header (130) comprising:
an inlet (140); and
an outlet (132), wherein the outlet of the second header is fluidically connected to the inlet of the second header; and
a core (50) comprising:
a plurality of tubes (52), wherein each tube of the plurality of tubes extends in a lengthwise direction from a first end (54) to a second end (56), wherein the first end of each tube of the plurality of tubes is fluidically connected to the outlet (122) of the first header, and the second end of each tube of the plurality of tubes is fluidically connected to the inlet (140) of the second header, the heat exchanger being **characterized in that** the plurality of tubes are stacked to create a concave profile in a height-wise direction and a widthwise direction, and wherein the concave profile extends an entire length of the plurality of tubes in the lengthwise direction.

8. The heat exchanger of claim 7, wherein the core (50) further comprises:
a first panel (57) extending in a height-wise direction and extending in a widthwise direction; and
a second panel (59) extending in a height-wise direction and extending in a widthwise direction,
wherein the first end of each plurality of tubes (52) extends through the first panel (57), and the second end of each plurality of tubes extends through the second panel (59), and wherein each tube of the plurality of tubes comprises a bend (58) between the first end and the second end.

9. The heat exchanger of claim 7, wherein the plurality of tubes (52) are stacked to create a second concave profile in the height-wise direction and the widthwise direction, wherein the second concave profile extends in the lengthwise direction.

10. The heat exchanger of claim 9, wherein the concave profile and the second concave profile together form a sinusoidal profile extending an entire length of the plurality of tubes in the lengthwise direction.

11. The heat exchanger of claim 10, wherein the heat exchanger further comprises:
a flow housing (60) that surrounds the core (50), wherein the flow housing (60) comprises:
an inlet (62) fluidically connected to an outlet (64).

12. The heat exchanger of claim 11, wherein the first header (112), the core (50), and the second header (130) form a primary flow path (P), and wherein flow housing (60) forms a secondary flow path (S).

13. The heat exchanger of claim 12, wherein the primary flow path (P) is fluidically isolated from the secondary flow path (S), wherein the secondary flow path (S) is transverse to the primary flow path (P), and wherein the sinusoidal profile faces an upstream direction of the secondary flow path (S).

14. The heat exchanger of claim 13, wherein the core (50) is additively manufactured, and wherein the first header (114) and the second header (130) are brazed or welded to the core.

15. The heat exchanger of claim 14, wherein the first header (114) and the core (50) are additively manufactured as a single monolithic part; and/or wherein the first header (114), the core (50), and the second header (130) are additively manufactured as a single monolithic part.

## Patentansprüche

1. Wärmetauscher (10), umfassend:
einen Wärmetauscherkern (50), wobei der Wärmetauscherkern Folgendes umfasst:
eine Vielzahl von Rohren (52), die Folgendes umfasst:
ein erstes Ende (54); und
ein zweites Ende (56), wobei sich jedes Rohr der Vielzahl von Rohren (52) in einer Längsrichtung von dem ersten Ende (54) zu dem zweiten Ende (56) erstreckt und wobei jedes Rohr der Vielzahl von Rohren (50) in einer Höhenrichtung und einer Breitenrichtung von benachbarten Rohren beabstandet ist,
wobei der Wärmetauscher **dadurch gekennzeichnet ist, dass** die Vielzahl von Rohren (50) so gestapelt ist, dass ein konkaves Profil in der Höhenrichtung und Breitenrichtung entsteht, und wobei sich das konkave Profil in der Längsrichtung über die gesamte Länge der Vielzahl von Rohren erstreckt.

2. Wärmetauscher nach Anspruch 1, wobei jedes Rohr der Vielzahl von Rohren (50) eine Biegung zwischen dem ersten Ende und dem zweiten Ende umfasst.

3. Wärmetauscherkern nach Anspruch 2, ferner umfassend:
einen ersten Sammler (12), der Folgendes umfasst:
einen Einlass (14);
einen primären Strömungskanal (16), der mit dem Einlass (14) fluidverbunden ist;
eine Vielzahl von sekundären Strömungskanälen (18), die durch den primären Strömungskanal (16) mit dem Einlass (14) fluidverbunden ist, wobei sich der primäre Strömungskanal (16) aufspaltet, um die Vielzahl von sekundären Strömungskanälen (18) zu bilden; und
eine Vielzahl von tertiären Strömungskanälen (20), die durch die Vielzahl von sekundären Strömungskanälen (18) und den primären Strömungskanal (16) mit dem Einlass (14) fluidverbunden ist, wobei sich jeder Strömungskanal der Vielzahl von sekundären Strömungskanälen (18) aufspaltet, um die Vielzahl von tertiären Strömungskanälen (20) zu bilden; und
einen zweiten Sammler (30), der Folgendes umfasst:
einen Auslass (32);
einen primären Strömungskanal (34), der mit dem Auslass (32) fluidverbunden ist;
eine Vielzahl von sekundären Strömungskanälen (36), die durch den primären Strömungskanal (34) des zweiten Sammlers mit dem Auslass (32) fluidverbunden ist, wobei sich der primäre Strömungskanal (34) des zweiten Sammlers aufspaltet, um die Vielzahl von sekundären Strömungskanälen (36) des zweiten Sammlers zu bilden; und
eine Vielzahl von tertiären Strömungskanälen (38), die durch die Vielzahl von sekundären Strömungskanälen (36) des zweiten Sammlers und den primären Strömungskanal (34) des zweiten Sammlers mit dem Auslass (32) fluidverbunden ist, wobei sich jeder Strömungskanal der Vielzahl von sekundären Strömungskanälen (36) des zweiten Sammlers aufspaltet, um die Vielzahl von tertiären Strömungskanälen (38) des zweiten Sammlers zu bilden.

4. Wärmetauscher nach Anspruch 3, wobei das erste Ende jedes Rohrs der Vielzahl von Rohren (52) mit einem der Vielzahl von tertiären Strömungskanälen (20) des ersten Sammlers verbunden ist, und wobei das zweite Ende jedes Rohrs der Vielzahl von Rohren (52) mit einem der Vielzahl von tertiären Strömungskanälen (38) des zweiten Sammlers verbunden ist.

5. Wärmetauscher nach Anspruch 4, umfassend ein Strömungsgehäuse (60), das den Wärmetauscherkern (50) umgibt, wobei das Strömungsgehäuse einen Einlass (62) und einen Auslass (64) umfasst und wobei der Einlass (62) des Strömungsgehäuses und der Auslass (64) des Strömungsgehäuses fluidverbunden sind.

6. Wärmetauscher nach Anspruch 5, wobei das Strömungsgehäuse (60) ein Kanal, eine Umhüllung, eine Ummantelung oder ein Verteiler ist, und wobei der erste Sammler (12), der Wärmetauscherkern (50) und der zweite Sammler (30) einen primären Strömungsweg (P) bilden, und wobei das Strömungsgehäuse (60) einen sekundären Strömungsweg (S) bildet, und wobei vorzugsweise der primäre Strömungsweg (P) von dem sekundären Strömungsweg (S) fluidisoliert ist, und wobei der sekundäre Strömungsweg (S) quer zu dem primären Strömungsweg (P) verläuft, und wobei vorzugsweise das konkave Profil in eine stromaufwärtige Richtung des sekundären Strömungswegs (S) weist.

7. Wärmetauscher (10), umfassend:
einen ersten Sammler (112), der Folgendes umfasst:
einen Einlass (114); und
einen Auslass (122), wobei der Auslass mit dem Einlass fluidverbunden ist;
einen zweiten Sammler (130), der Folgendes umfasst:
einen Einlass (140); und
einen Auslass (132), wobei der Auslass des zweiten Sammlers mit dem Einlass des zweiten Verteilers fluidverbunden ist; und
einen Kern (50), der Folgendes umfasst:
eine Vielzahl von Rohren (52), wobei sich jedes Rohr der Vielzahl von Rohren in einer Längsrichtung von einem ersten Ende (54) zu einem zweiten Ende (56) erstreckt, wobei das erste Ende jedes Rohrs der Vielzahl von Rohren mit dem Auslass (122) des ersten Sammlers fluidverbunden ist und das zweite Ende jedes Rohrs der Vielzahl von Rohren mit dem Einlass (140) des zweiten Sammlers fluidverbunden ist, wobei der Wärmetauscher **dadurch gekennzeichnet ist, dass** die Vielzahl von Rohren so gestapelt ist, dass ein konkaves Profil in einer Höhenrichtung und einer Breitenrichtung entsteht, und wobei sich das konkave Profil in der Längsrichtung über eine gesamte Länge der Vielzahl von Rohren erstreckt.

8. Wärmeaustauscher nach Anspruch 7, wobei der Kern (50) ferner Folgendes umfasst:
eine erste Platte (57), die sich in einer Höhenrichtung erstreckt und in einer Breitenrichtung erstreckt; und
eine zweite Platte (59), die sich in einer Höhenrichtung erstreckt und in einer Breitenrichtung erstreckt,
wobei sich das erste Ende jeder Vielzahl von Rohren (52) durch die erste Platte (57) erstreckt und sich das zweite Ende jeder Vielzahl von Rohren durch die zweite Platte (59) erstreckt, und
wobei jedes Rohr der Vielzahl von Rohren eine Biegung (58) zwischen dem ersten Ende und dem zweiten Ende aufweist.

9. Wärmetauscher nach Anspruch 7, wobei die Vielzahl von Rohren (52) so gestapelt sind, dass ein zweites konkaves Profil in der Höhenrichtung und der Breitenrichtung entsteht, wobei sich das zweite konkave Profil in der Längsrichtung erstreckt.

10. Wärmetauscher nach Anspruch 9, wobei das konkave Profil und das zweite konkave Profil zusammen ein sinusförmiges Profil bilden, das sich in der Längsrichtung über eine gesamte Länge der Vielzahl von Rohren erstreckt.

11. Wärmetauscher nach Anspruch 10, wobei der Wärmetauscher ferner Folgendes umfasst:
ein Strömungsgehäuse (60), das den Kern (50) umgibt, wobei das Strömungsgehäuse (60) Folgendes umfasst:
einen Einlass (62), der mit einem Auslass (64) fluidverbunden ist.

12. Wärmetauscher nach Anspruch 11, wobei der erste Sammler (112), der Kern (50) und der zweite Sammler (130) einen primären Strömungsweg (P) bilden und wobei das Strömungsgehäuse (60) einen sekundären Strömungsweg (S) bildet.

13. Wärmetauscher nach Anspruch 12, wobei der primäre Strömungsweg (P) von dem sekundären Strömungsweg (S) fluidisoliert ist, wobei der sekundäre Strömungsweg (S) quer zu dem primären Strömungsweg (P) verläuft und wobei das sinusförmige Profil in eine stromaufwärtige Richtung des sekundären Strömungswegs (S) weist.

14. Wärmetauscher nach Anspruch 13, wobei der Kern (50) additiv hergestellt ist und wobei der erste Sammler (114) und der zweite Sammler (130) an den Kern gelötet oder geschweißt sind.

15. Wärmetauscher nach Anspruch 14, wobei der erste Sammler (114) und der Kern (50) additiv als ein einziges monolithisches Teil hergestellt sind; und/oder wobei der erste Sammler (114), der Kern (50) und der zweite Sammler (130) additiv als ein einziges monolithisches Teil hergestellt sind.

## Revendications

1. Échangeur de chaleur (10) comprenant :
un noyau d'échangeur de chaleur (50), dans lequel le noyau d'échangeur de chaleur comprend :
une pluralité de tubes (52) comprenant :
une première extrémité (54) ; et
une seconde extrémité (56), dans laquelle chaque tube de la pluralité de tubes (52) se prolonge de la première extrémité (54) à la seconde extrémité (56) dans une direction longitudinale, et dans laquelle chaque tube de la pluralité de tubes (50) est espacé des tubes adjacents dans une direction de la hauteur et une direction de la largeur,
l'échangeur de chaleur est **caractérisé en ce que** la pluralité de tubes (50) est empilée pour créer un profil concave dans la direction de la hauteur et dans la direction de la largeur, et
dans lequel le profil concave se prolonge sur toute la longueur de la pluralité de tubes dans la direction de la longueur.

2. Échangeur de chaleur selon la revendication 1, dans lequel chaque tube de la pluralité de tubes (50) comprend un coude entre la première extrémité et la seconde extrémité.

3. Échangeur de chaleur selon la revendication 2, comprenant également :
un premier collecteur (12) comprenant :
une entrée (14) ;
un conduit d'écoulement primaire (16) relié de manière fluidique à l'entrée (14) ;
une pluralité de conduits d'écoulement secondaires (18) reliés de manière fluidique à l'entrée (14) par le conduit d'écoulement primaire (16), le conduit d'écoulement primaire (16) se divisant pour former la pluralité de conduits d'écoulement secondaires (18) ; et
une multiplicité de conduits d'écoulement tertiaires (20) reliés de manière fluidique à l'entrée (14) par la pluralité de conduits d'écoulement secondaires (18) et le conduit d'écoulement primaire (16), chaque conduit d'écoulement de la pluralité de conduits d'écoulement secondaires (18) se divisant pour former la multiplicité de conduits d'écoulement tertiaires (20) ; et
un deuxième collecteur (30) comprenant :
une sortie (32) ;
un conduit d'écoulement primaire (34) relié de manière fluidique à la sortie (32) ;
une pluralité de conduits d'écoulement secondaires (36) reliés de manière fluidique à la sortie (32) par le conduit d'écoulement primaire (34) du second collecteur, le conduit d'écoulement primaire (34) du second collecteur se divisant pour former la pluralité de conduits d'écoulement secondaires (36) du second collecteur ; et
une multiplicité de conduits d'écoulement tertiaires (38) reliés de manière fluidique à la sortie (32) par la pluralité de conduits d'écoulement secondaires (36) du second collecteur et le conduit d'écoulement primaire (34) du second collecteur, chaque conduit d'écoulement de la pluralité de conduits d'écoulement secondaires (36) du second collecteur se divisant pour former la multiplicité de conduits d'écoulement tertiaires (38) du second collecteur.

4. Échangeur de chaleur selon la revendication 3, dans lequel la première extrémité de chaque tube de la pluralité de tubes (52) est reliée à l'un de la pluralité de conduits d'écoulement tertiaire (20) du premier collecteur, et dans lequel la seconde extrémité de chaque tube de la pluralité de tubes (52) est reliée à l'un de la pluralité de conduits d'écoulement tertiaire (38) du second collecteur.

5. Échangeur de chaleur selon la revendication 4, comprenant un boîtier d'écoulement (60) qui entoure le noyau d'échangeur de chaleur (50), dans lequel le boîtier d'écoulement comprend une entrée (62) et une sortie (64), et dans lequel l'entrée (62) du boîtier d'écoulement et la sortie (64) du boîtier d'écoulement sont reliées de manière fluidique.

6. Échangeur de chaleur selon la revendication 5, dans lequel le boîtier d'écoulement (60) est un conduit, une enveloppe, un carénage ou un collecteur, et dans lequel le premier collecteur (12), le noyau d'échangeur de chaleur (50) et le second collecteur (30) forment un trajet d'écoulement primaire (P), et dans lequel le boîtier d'écoulement (60) forme un trajet d'écoulement secondaire (S), et de préférence dans lequel le trajet d'écoulement primaire (P) est de manière fluidique isolé du trajet d'écoulement secondaire (S), et dans lequel le trajet d'écoulement secondaire (S) est transversal au trajet d'écoulement primaire (P), et de préférence dans lequel le profil concave fait face à une direction amont du trajet d'écoulement secondaire (S).

7. Échangeur de chaleur (10) comprenant :
un premier collecteur (112) comprenant :
une entrée (114) ; et
une sortie (122), dans lequel la sortie étant reliée de manière fluidique à l'entrée ;
un deuxième collecteur (130) comprenant :
une entrée (140) ; et
une sortie (132), dans laquelle la sortie du second collecteur est reliée de manière fluidique à l'entrée du second collecteur ; et
un noyau (50) comprenant :
une pluralité de tubes (52), dans laquelle chaque tube de la pluralité de tubes se prolonge dans une direction longitudinale d'une première extrémité (54) à une seconde extrémité (56), dans laquelle la première extrémité de chaque tube de la pluralité de tubes est reliée de manière fluidique à la sortie (122) du premier collecteur, et la seconde extrémité de chaque tube de la pluralité de tubes est reliée de manière fluidique à l'entrée (140) du second collecteur, l'échangeur de chaleur étant **caractérisé en ce que** la pluralité de tubes sont empilés pour créer un profil concave dans une direction de la hauteur et une direction de la largeur, et dans laquelle le profil concave se prolonge sur toute la longueur de la pluralité de tubes dans la direction de la longueur.

8. Échangeur de chaleur selon la revendication 7, dans lequel le noyau (50) comprend également :
un premier panneau (57) se prolongeant dans le sens de la hauteur et dans le sens de la largeur ; et
un deuxième panneau (59) se prolongeant dans le sens de la hauteur et dans le sens de la largeur,
dans lequel la première extrémité de chaque pluralité de tubes (52) se prolonge à travers le premier panneau (57), et la seconde extrémité de chaque pluralité de tubes se prolonge à travers le second panneau (59), et dans lequel chaque tube de la pluralité de tubes comprend un coude (58) entre la première extrémité et la seconde extrémité.

9. Échangeur de chaleur selon la revendication 7, dans lequel la pluralité de tubes (52) sont empilés pour créer un second profil concave dans la direction de la hauteur et dans la direction de la largeur, dans lequel le second profil concave se prolonge dans la direction de la longueur.

10. Échangeur de chaleur selon la revendication 9, dans lequel le profil concave et le second profil concave forment ensemble un profil sinusoïdal se prolongeant sur toute la longueur de la pluralité de tubes dans le sens de la longueur.

11. Échangeur de chaleur selon la revendication 10, dans lequel l'échangeur de chaleur comprend également :
un boîtier d'écoulement (60) qui entoure le noyau (50), dans lequel le boîtier d'écoulement (60) comprend :
une entrée (62) reliée de manière fluidique à une sortie (64).

12. Échangeur de chaleur selon la revendication 11, dans lequel le premier collecteur (112), le noyau (50) et le second collecteur (130) forment un trajet d'écoulement primaire (P), et dans lequel le boîtier d'écoulement (60) forme un trajet d'écoulement secondaire (S).

13. Échangeur de chaleur selon la revendication 12, dans lequel le trajet d'écoulement primaire (P) est isolé de manière fluidique du trajet d'écoulement secondaire (S), dans lequel le trajet d'écoulement secondaire (S) est transversal au trajet d'écoulement primaire (P), et dans lequel le profil sinusoïdal fait face à une direction amont du trajet d'écoulement secondaire (S).

14. Échangeur de chaleur selon la revendication 13, dans lequel le noyau (50) est fabriqué de manière additive, et dans lequel le premier collecteur (114) et le second collecteur (130) sont brasés ou soudés au noyau.

15. Échangeur de chaleur selon la revendication 14, dans lequel le premier collecteur (114) et le noyau (50) sont fabriqués de manière additive en tant que pièce monolithique unique ; et/ou dans lequel le premier collecteur (114), le noyau (50) et le second collecteur (130) sont fabriqués de manière additive en tant que pièce monolithique unique.
